# FASCICULE DE BREVET EUROPEEN

(11) **EP 0 993 264 B1**
(45) Date de publication et mention de la délivrance du brevet: **05.02.2003**
(21) Numéro de dépôt: 98935092.1
(22) Date de dépôt: 03.07.1998
(51) Int. Cl.: A47J 42/56

(54) **APPAREIL ELECTROMENAGER POUR LE TRAITEMENT DES ALIMENTS COMPORTANT UN DISPOSITIF DE SECURITE**
ELEKTRISCHES KÜCHENGERÄT MIT EINER SICHERHEITSVORRICHTUNG
ELECTRICAL HOUSEHOLD APPLIANCE FOR PROCESSING FOOD COMPRISING A SAFETY DEVICE

(30) Priorité: 04.07.1997 FR 9708533
(43) Date de publication de la demande: 19.04.2000
(73) Titulaire: MOULINEX S.A., 75008 Paris (FR)
(72) Inventeur: BOULEAU, Jean-Paul, F-72610 Champfleur (FR); DESCHAMPS, Joel, F-53100 Mayenne (FR)
(74) Mandataire: Busquets, Jean-Pierre
(86) Numéro de dépôt international: FR9801426
(87) Numéro de publication internationale: WO99001060

(56) Documents cités:
- WO-A-95/24852
- FR-A- 2 472 925
- US-A- 3 892 365
- US-A- 4 111 372
- US-A- 5 445 070
- US-A- 5 454 299

## Description

La présente invention se rapporte à un appareil électroménager pour le traitement des aliments, du type notamment, mais non exclusivement, robot de cuisine, qui comporte un boîtier renfermant un groupe moteur électrique et présentant une région formant une embase dont la face supérieure est traversée par l'arbre de sortie du groupe moteur, et un bol verrouillé de manière amovible sur l'embase du boîtier, fermé par verrouillage par un couvercle amovible, et logeant un outil de travail destiné à être entraîné en rotation par l'arbre du groupe moteur.

Elle concerne, plus précisément, un appareil de ce genre qui comporte en outre un dispositif de sécurité comprenant un interrupteur agencé dans le circuit d'alimentation du moteur, un poussoir monté coulissant verticalement dans un logement pratiqué sur toute la hauteur de la paroi périphérique du bol, dont l'extrémité inférieure est disposée à l'aplomb d'une ouverture pratiquée à la périphérie de l'embase du boîtier, lorsque le bol est verrouillé sur l'embase, et dont l'extrémité supérieure est susceptible d'être actionnée par une came portée par le couvercle, lorsque ce dernier est verrouillé sur le bol en place, de sorte que le poussoir est enfoncé dans l'ouverture de l'embase, ainsi qu'un mécanisme de commande logé dans le boîtier, actionné par le poussoir lors de son enfoncement dans ladite ouverture, et venant commander la fermeture de l'interrupteur pour autoriser l'alimentation du moteur.

On sait que dans un tel appareil, il importe d'éviter tout contact d'une main avec l'outil de travail en rotation, constitué généralement par un outil tranchant considéré comme dangereux, afin de prévenir des accidents et, à cet effet, le dispositif de sécurité du type ci-dessus qui équipe l'appareil est adapté à autoriser le fonctionnement du moteur seulement lorsque le bol est verrouillé sur l'embas du boîtier, et lorsque ce bol est lui-même verrouillé par le couvercle.

Dans un appareil électroménager équipé d'un dispositif de sécurité connu de ce genre, tel que décrit dans le document FR-A-2 472 925, l'ouverture de l'embase destinée au passage du poussoir débouche vers l'extérieur lorsque le bol n'est pas en place sur l'embase, et est fermée à sa partie inférieure par une membrane souple déformable qui est maintenue par une lèvre formée sur la surface inférieure de l'embase, de sorte que lors du verrouillage du couvercle sur le bol une fois en place sur l'embase, la came portée par le couvercle actionne le poussoir qui est alors enfoncé dans l'ouverture de l'embase, lequel poussoir étire la membrane et agit sur le mécanisme de commande de l'interrupteur pour provoquer la fermeture du circuit d'alimentation électrique du moteur. Toutefois, cette membrane souple constitue en soi un organe coûteux, difficile à mettre en place, susceptible de se détacher, et sujet à se détériorer dans le temps, voire à se déchirer par suite de ses étirements répétés sous l'action du poussoir, rendant alors inutilisable l'appareil. En outre, l'ouverture de l'embase étant débouchante vers l'extérieur, donc visible, lorsque le bol n'est pas en place, celle-ci a de fait tendance à attirer l'attention, en particulier d'un enfant, et dès lors, conduire à une mise en marche frauduleuse du moteur en étirant la membrane à l'aide d'un objet quelconque introduit dans cette ouverture. De plus, cette ouverture de l'embase forme un piège à aliments qui est donc susceptible d'entraver la commande de l'interrupteur, et qui est difficilement nettoyable.

L'invention a notamment pour but de remédier à ces inconvénients et de réaliser un appareil électroménager, du type exposé ci-dessus, dans lequel le dispositif de sécurité soit d'une mise en oeuvre parfaite et d'une grande fiabilité.

Selon l'invention, le dispositif de sécurité comprend en outre une pièce rigide formant un cache qui est monté mobile sur la face supérieure de l'embase du boîtier entre une position de repos en laquelle il est amené automatiquement lorsque le bol n'est pas en place sur l'embase et dans laquelle il masque l'ouverture de l'embase, et une position active pour laquelle il est déplacé sous l'action d'un organe d'actionnement porté par le bol lors du verrouillage de celui-ci sur l'embase et dans laquelle il découvre l'ouverture de l'embase de manière à permettre le passage du poussoir.

Ainsi, ce cache rigide constitue désormais une véritable pièce mécanique robuste, donc fiable, qui est de plus simple, peu coûteuse, facile à réaliser et parfaitement adaptée à une fabrication en grande série. En outre, l'ouverture de l'embase étant masquée d'une manière automatique par le cache en position de repos, lorsque le bol n'est pas en place, ce cache constitue en soi un organe propre à dissuader tout enfant d'accéder au mécanisme de commande de l'interrupteur, donc de mettre frauduleusement en marche le moteur, ce qui renforce notablement la sécurité de l'appareil. Ce renforcement de la sécurité est d'autant plus justifié que le déplacement du cache permettant de découvrir l'ouverture de l'embase est subordonné au verrouillage même du bol sur l'embase.

Selon un exemple de réalisation préféré, le cache est monté coulissant horizontalement, suivant une direction transversale à l'axe vertical de l'arbre du groupe moteur, dans un logement qui est pratiqué dans la face supérieure de l'embase en s'étendant jusqu'au bord périphérique de ladite embase, et dans lequel débouche l'ouverture de l'embase, ledit cache étant monté coulissant à l'encontre d'un ressort de rappel qui tend à le rappeler en position de repos.

Les caractéristiques et avantages de l'invention ressortiront d'ailleurs de la description qui va suivre, à titre d'exemple non limitatif, en référence aux dessins annexés dans lesquels :
- la figure 1 est une vue éclatée schématique en coupe verticale d'un boîtier, d'un bol et d'un couvercle d'un appareil électroménager selon l'invention ;
- la figure 2 est une vue similaire à la figure 1, après verrouillage du bol sur le boîtier ;
- la figure 3 est une vue similaire à la figure 2, après verrouillage du couvercle sur le bol ;
- la figure 4 est une vue schématique en perspective, à échelle agrandie, d'une trappe sur laquelle est monté articulé un levier basculant ;
- la figure 5 est une vue schématique en perspective, à plus grande échelle, de ce levier basculant ; et
- les figures 6, 7 et 8 sont des vues schématiques de dessus d'une pièce coulissante de commande de deux interrupteurs, associée à la trappe de la figure 4, et susceptible d'occuper trois positions correspondant respectivement à une position de repos (figure 6) pour laquelle le bol n'est pas verrouillé sur le boîtier (figure 1), à une position d'approche (figure 7) pour laquelle le bol est verrouillé sur le boîtier (figure 2), et à une position de fermeture (figure 8) pour laquelle le couvercle est verrouillé sur le bol en place (figure 3).

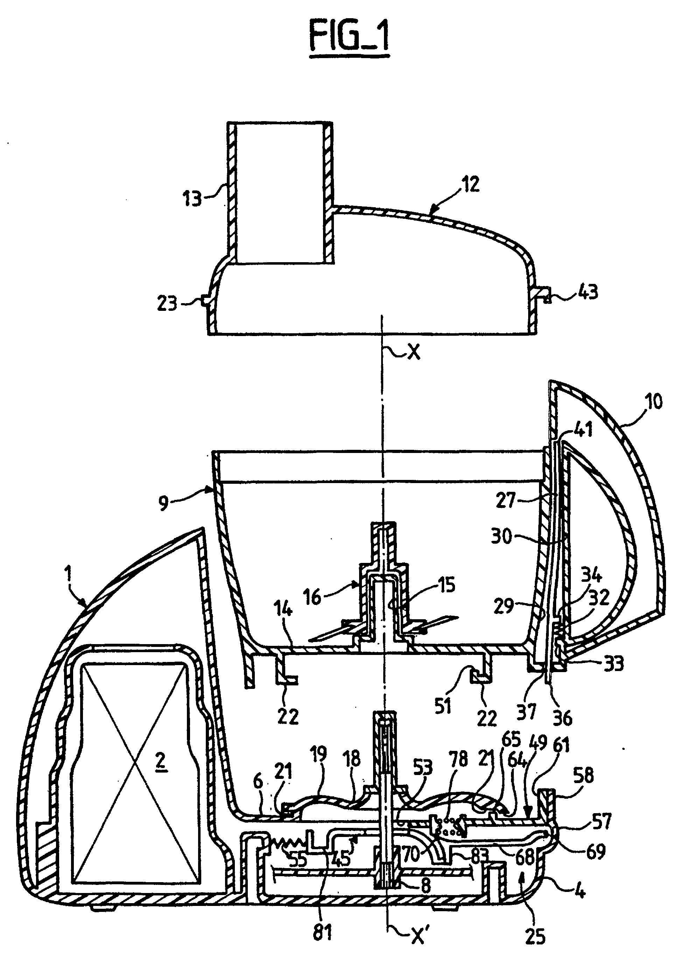

L'appareil électroménager pour le traitement des aliments, représenté sur les figures 1 à 3, est un robot de cuisine comportant un boîtier ou socle 1 ayant une forme générale de L qui renferme un groupe moteur électrique 2 et qui présente une région formant une embase 4, par exemple de forme circulaire, dont la face supérieure 6 est traversée par l'arbre de sortie vertical 8, d'axe XX', du groupe moteur. Sur cette embase 4 est destiné à être monté de manière amovible un bol ou récipient de travail 9 réalisé en matière plastique transparente et pourvu d'une poignée 10. Le bol 9 est destiné à être fermé par un couvercle amovible 12 pourvu d'une trémie ou tube d'alimentation 13 dans lequel sont introduits les aliments à préparer.

Le bol 9 présente une paroi de fond 14 surmontée d'une cheminée 15 (figure 1) dans laquelle vient s'engager l'arbre de sortie 8 du groupe moteur 2, et loge un outil de travail rotatif 16, tel qu'un couteau, qui est enfilé sur la cheminée 15 et qui est accouplé en rotation avec l'arbre de sortie 8 du groupe moteur 2.

Le bol 9 est verrouillé sur l'embase 4 au moyen d'un système de fixation à baïonnette et, à cet effet, la face supérieure 6 de l'embase 4 porte en saillie une galette 18 dont la face supérieure 19 est munie latéralement, d'une manière régulière sur son pourtour, d'une pluralité de crans 21, mieux visibles à la figure 1, dans lesquels viennent s'insérer, par suite d'une rotation du bol 9, des ergots 22, mieux visibles à la figure 1, portés par la face externe de la paroi de fond 14 du bol 9.

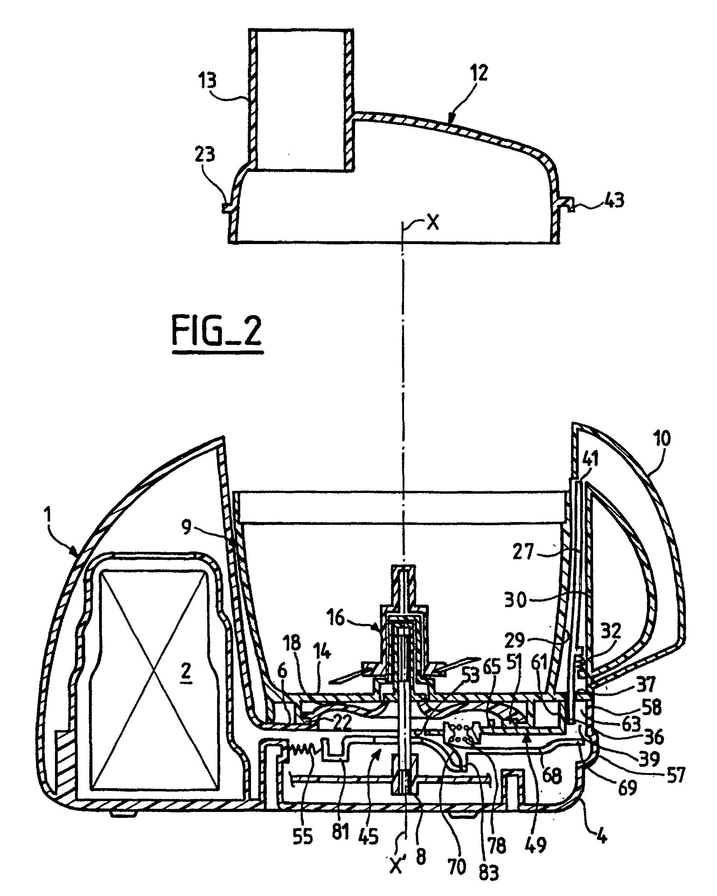

Le couvercle 12 est verrouillé sur le bol 9 au moyen d'un système de fixation du type à baïonnette, dont l'un des éléments est désigné en 23 sur les figures 1 et 2.

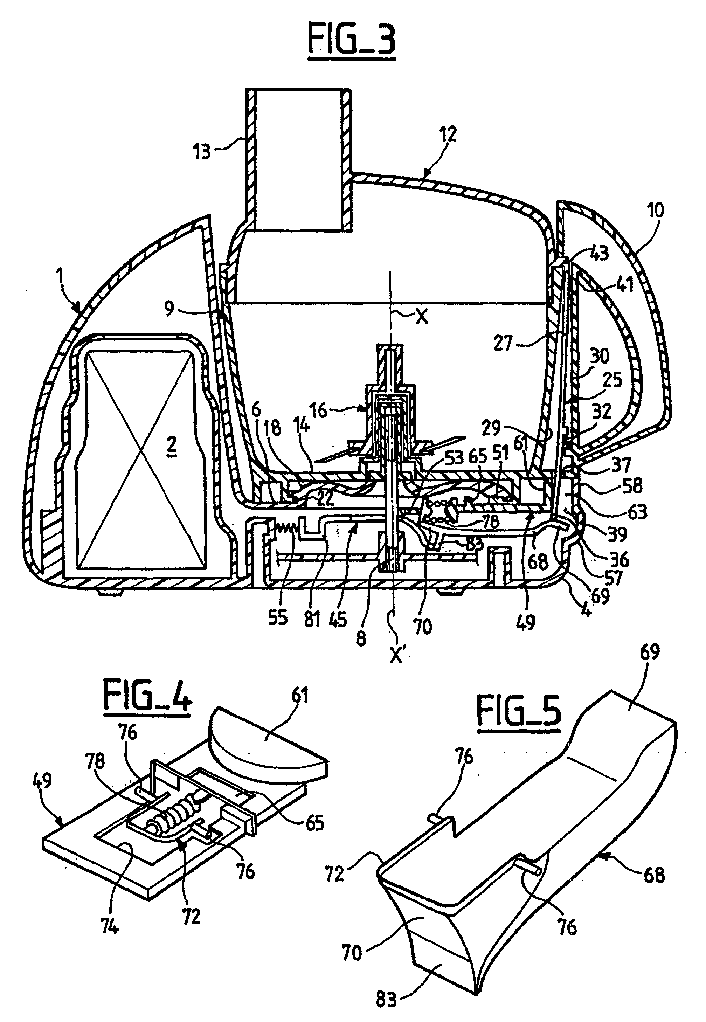

Le robot de cuisine, figures 1 à 3, comporte en outre un dispositif de sécurité, désigné par la référence globale 25 sur les figures 1 et 3, comprenant un poussoir 27 monté coulissant verticalement dans un logement 29 pratiqué sur toute la hauteur de la paroi périphérique 30 du bol 9 située en regard de la poignée 10 du bol. Le poussoir 27 est monté coulissant à l'encontre d'un ressort de rappel 32 interposé entre une surface horizontale d'appui 33 formée dans la paroi périphérique 30 du bol et une petite aile horizontale 34 formée d'équerre sur le poussoir 27, dans la partie inférieure de celui-ci, voir figure 1.

Ce poussoir 27 présente une extrémité inférieure 36 qui fait légèrement saillie à travers une lumière 37 ménagée dans le fond de la paroi périphérique 30 du bol 9, comme visible à la figure 1, et qui est disposée à l'aplomb d'une ouverture 39 (figures 2 et 3) pratiquée à la périphérie de l'embase 4, lorsque le bol 9 est verrouillé sur l'embase 4 comme illustré à la figure 2.

Le poussoir 27 présente également une extrémité supérieure 41 qui est actionnée par une came 43 portée par le couvercle 12, lorsque ce dernier est verrouillé sur le bol 9 en place comme illustré à la figure 3, de sorte que le poussoir 27 est enfoncé dans l'ouverture 39 de l'embase à l'encontre de son ressort de rappel 32, voir figure 3.

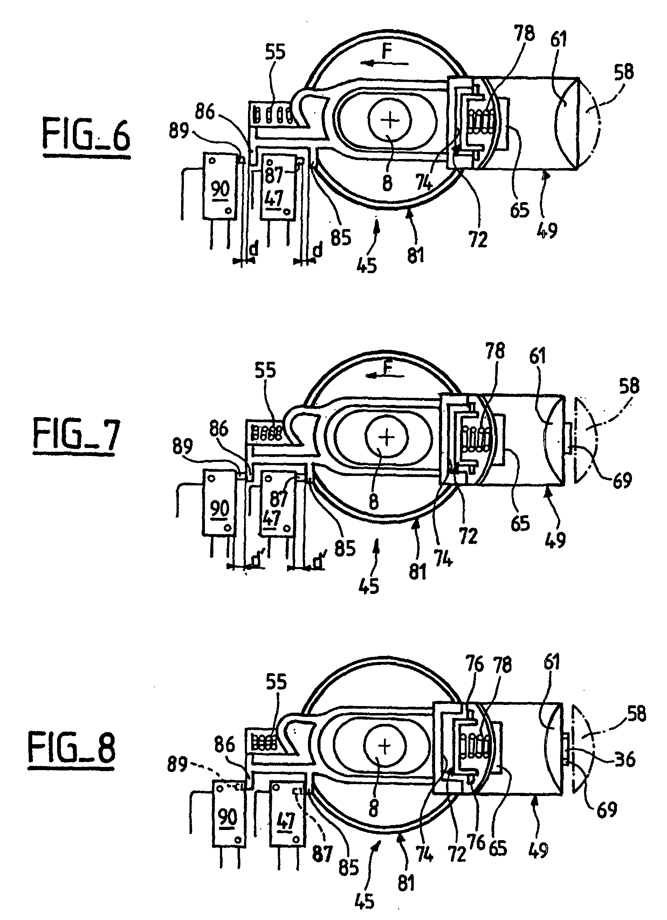

Le dispositif de sécurité 25, figure 3, comprend également un mécanisme de commande 45, que l'on décrira en détail par la suite, logé dans le boîtier 1, actionné par le poussoir 27 lors de son enfoncement dans l'ouverture 39 (voir figure 3) et venant commander la fermeture d'un premier interrupteur, noté 47 sur les figures 6 à 8, agencé dans le circuit d'alimentation du groupe moteur.

Selon l'invention, ce dispositif de sécurité comprend en outre une pièce rigide formant un cache 49 qui est monté mobile sur la face supérieure 6 de l'embase 4 entre une position de repos (figure 1) en laquelle il est amené automatiquement lorsque le bol 9 n'est pas en place sur l'embase 4 et dans laquelle il masque l'ouverture 39 de l'embase, et une position active (figure 2) pour laquelle il est déplacé sous l'action d'un organe d'actionnement 51 porté par le bol 9 lors du verrouillage de celui-ci sur l'embase 4 et dans laquelle il découvre l'ouverture 39 de l'embase de manière à permettre le passage du poussoir 27.

Selon un mode d'exécution préféré de l'invention, représenté sur les figures 1 à 3, le cache 49 est réalisé sous la forme générale d'une plaquette rectangulaire qui est montée coulissante horizontalement, suivant une direction orthogonale à l'axe vertical XX' de l'arbre de sortie 8 du groupe moteur 2, dans un logement 53 qui est pratiqué dans la face supérieure 6 de l'embase 4 en s'étendant jusqu'au bord périphérique de cette embase, et dans lequel débouche l'ouverture 39 de l'embase. Ce cache 49 est monté coulissant à l'encontre d'un ressort de rappel 55 lié au mécanisme de commande 45 et destiné à le rappeler en position de repos (figure 1).

Dans ce mode d'exécution, l'embase 4 présente à sa périphérie, du même côté que le cache 49, un renflement vertical saillant intégré 57 ayant une partie supérieure formant une aile 58, par exemple de forme sensiblement semi-circulaire comme montré en traits mixtes sur les figures 6 à 8, qui s'élève à une certaine hauteur par rapport à la face supérieure 6 de l'embase 4. Dans cette réalisation, le cache 49 comporte, quant à lui, à son extrémité avant située à la périphérie de l'embase 4, une aile verticale 61, de forme identique à celle de l'aile 58, en l'occurrence de forme sensiblement semi-circulaire mais inversée par rapport à la forme de l'aile 58 comme visible aux figures 4 et 6 à 8, qui s'élève à la même hauteur que cette aile 58 par rapport à la face supérieure 6 de l'embase 4. Ainsi, lorsque le cache 49 est en position de repos (figure 1), les deux ailes 58 et 61 sont accolées latéralement l'une à l'autre par leur face plane, réalisant ainsi une étanchéité du boîtier 1 ; lorsque le cache 49 vient occuper par coulissement, suivant une faible course, de l'ordre de 3 millimètres, sa position active (figure 2), l'aile 61 du cache 49 est alors séparée de l'aile 58 du renflement 57 de manière à former entre elles un espace 63 débouchant dans le logement 53 du cache et constituant en soi l'ouverture de passage du poussoir 27.

Comme le montre la figure 1, l'un des crans 21 de la galette 18 s'étend au niveau du cache 49 et présente une lumière 64 traversant la galette, tandis quel'organe 51, destiné à actionner le cache 49 lors du verrouillage du bol 9 sur l'embase 4, est réalisé sous la forme d'une rampe pratiquée sur l'un des ergots 22 du bol qui est associé à ce cran 21. Le cache 49 porte une nervure transversale 65 qui est positionnée dans la lumière 64 de ce cran 21 d'une manière sous-jacente à la face supérieure de la galette 18, lorsque le bol 9 n'est pas en place sur l'embase 4, voir figure 1. Lors du verrouillage par rotation du bol 9 sur l'embase 4, la rampe 51 de l'ergot 22 du bol agit sur la nervure 65 du cache 49 et provoque ainsi le coulissement du cache 49, vers le centre de l'embase 4, dont l'aile 61 se sépare de l'aile 58 du renflement 57 pour former l'ouverture 63 de passage du poussoir 27, comme illustré à la figure 2.

De préférence, le cache 49 ainsi que son aile 61 et sa nervure 65 sont moulés d'une seule pièce en une matière plastique rigide, telle que par exemple un polypropylène.

On notera ici que, lorsque le bol 9 n'est pas en place sur l'embase 4 (figure 1), l'ouverture de passage du poussoir 27 est fermée par accolement des deux ailes 58 et 61, et la nervure 65 du cache est dissimulée sous l'un des crans 21 de la galette 18, de sorte que le cache 49 dissuade d'une manière efficace tout enfant de manoeuvrer ce cache pour le faire coulisser en vue de tenter de mettre frauduleusement en marche le groupe moteur,renforçant ainsi la sécurité de l'appareil.

Le mécanisme de commande 45, figures 1 à 3, comporte un levier basculant 68 s'étendant en dessous du cache 49, dont l'une 69 des extrémités est située à proximité du bord périphérique de l'embase 4 et est destinée à être actionnée par le poussoir 27 lors de l'enfoncement de celui-ci dans l'ouverture 63 (figure 3), et dont l'autre extrémité 70 est conformée en une biellette 72, mieux visible à la figure 5, qui est montée articulée sur la face supérieure du cache 49, comme on le voit bien à la figure 4, à travers un évidement 74 pratiqué dans le cache, au moyen de deux tourillons 76 constituant l'axe de basculement du levier 68. Cette biellette 72 est sollicitée par un ressort de compression accumulateur d'énergie 78 qui, avant basculement du levier 68, s'étend dans un plan parallèle à celui passant par le ressort de rappel 55 du cache 49, comme montré à la figure 1.

Ce mécanisme de commande 45 comprend de plus une pièce de commande 81, mieux visible aux figures 6 à 8, qui est traversée par l'arbre de sortie 8 du groupe moteur, et qui est montée coulissante horizontalement dans le boîtier 1, suivant la même direction que le cache 49. Cette pièce de commande 81 est associée à une patte verticale 83 portée par le levier 68, sous la biellette 72, et est sollicitée par le ressort de rappel 55.

Comme le montrent les figures 6 à 8, la pièce de commande 81 possède à sa partie arrière deux doigts horizontaux 85 et 86, parallèles l'un à l'autre et s'étendant perpendiculairement à la direction de coulissement de la pièce de commande 81, repérée par la flèche F sur les figures 6 et 7. Le doigt 85 est destiné à coopérer avec une touche 87 de l'interrupteur 47 de commande de la fermeture du circuit d'alimentation du groupe moteur, tandis que le doigt 86 est destiné à coopérer d'une manière simultanée au doigt 85 avec une touche 89 d'un second interrupteur 90, monté en inverseur, et relié électriquement à un dispositif, non représenté mais connu en soi, pour commander le freinage du moteur électrique.

A titre d'exemple, ce dispositif de freinage peut être conçu pour faire circuler dans le moteur électrique, lorsque celui-ci est du type universel, un contre-courant qui crée un champ magnétique tendant à provoquer la rotation en sens inverse du moteur.

De préférence, la pièce de commande 81 et les deux doigts d'actionnement 85 et 86 sont moulés d'une seule pièce en matière plastique.

Lorsque le bol 9 n'est pas en place sur l'embase 4, comme montré à la figure 1, le cache 49 est en position de repos dans laquelle l'ouverture de passage du poussoir 27 est entièrement fermée par accolement latéral des deux ailes 58 et 61, et la pièce de commande 81 occupe également une position de repos, illustrée à la figure 6, dans laquelle les deux doigts 85 et 86 n'actionnent pas les deux interrupteurs 47 et 90, respectivement.

Lors du verrouillage par rotation du bol 9 sur l'embase 4, figure 2, le cache 49 coulisse pour faire apparaître l'ouverture 63 dans laquelle pénètre l'extrémité inférieure 36 du poussoir 27 ; au cours de ce coulissement du cache 49, la patte 83 du levier 68 monté articulé sur le cache 49 provoque le coulissement de la pièce de commande 81 à l'encontre du ressort de rappel 55, suivant une première partie de course dite d'approche, notée d sur la figure 6,en fin de laquelle les deux doigts 85 et 86 viennent en contact avec les touches respectives 87 et 89 des deux interrupteurs 47 et 90, comme illustré à la figure 7.

Puis, au cours du verrouillage par rotation du couvercle 12 sur le bol 9, comme montré à la figure 3, le poussoir 27 est enfoncé dans l'ouverture 63 sous l'action de la came 43 portée par le couvercle 12 et vient agir par son extrémité inférieure 36 sur l'extrémité 69 du levier 68 qui bascule alors en sens horaire autour des tourillons 76 de la biellette 72. Lors du basculement du levier 68, la patte 83 que porte celui-ci provoque un nouveau coulissement de la pièce de commande 81, toujours à l'encontre du ressort de rappel 55, suivant une seconde partie de course, notée d' sur la figure 7, en fin de laquelle les deux doigts 85 et 86 enfoncent les touches respectives 87 et 89 des deux interrupteurs 47 et 90, comme représenté sur la figure 8. L'interrupteur 47 est alors fermé de manière à autoriser l'alimentation du groupe moteur 2, tandis que l'interrupteur 90 vient occuper un état ouvert.

Il convient de souligner ici que le ressort de compression accumulateur d'énergie 78 présente une force de compression qui est notablement supérieure à celle du ressort de rappel 55 de manière à maintenir enfoncées les touches respectives 87 et 89 des deux interrupteurs 47 et 90 en fin de course (d + d') de la pièce de commande 81.

Après traitement des aliments, l'utilisateur procède au déverrouillage du couvercle 12 au cours duquel la came 43 qu'il porte libère le poussoir 27 qui remonte alors sous l'action de son ressort de rappel 32 et qui provoque un basculement en sens antihoraire du levier 68; l'ensemble formé par la pièce de commande 81 et le cache 49 coulisse alors en sens inverse sous l'action du ressort de rappel 55, suivant la partie de course d' (figure 7) en fin de laquelle les deux doigts 85 et 86 libèrent les touches respectives 87 et 89 des deux interrupteurs 47 et 90, comme représenté sur la figure 7. L'interrupteur 47 s'ouvre, tandis que l'interrupteur 90 passe à l'état fermé dans lequel il commande le dispositif de freinage du groupe moteur 2, de manière à arrêter très rapidement l'outil en rotation 16, et ce avant même que le couvercle soit complètement retiré, interdisant donc toute possibilité de blessure de l'utilisateur.

L'utilisateur procède ensuite au déverrouillage du bol 9, puis à son retrait au cours duquel la pièce de commande 81 et le cache 49 coulissent de nouveau en sens inverse, suivant cette fois la partie de course d (figure 6), pour revenir dans leur position de repos, telle qu'illustrée aux figures 1 et 6, dans laquelle le cache 49 vient fermer l'ouverture de passage du poussoir 27.

On notera que la description ci-dessus a été faite en référence à un dispositif de sécurité pour un robot de cuisine. Bien entendu, ce dispositif de sécurité s'applique également à tout autre appareil électroménager de traitement des aliments, tel qu'en particulier un hachoir électrique à couteau rotatif, conçu de manière que le boîtier renfermant le groupe moteur soit agencé au-dessous du bol de travail.

## Revendications

1. Appareil électroménager pour le traitement des aliments, comportant un boîtier (1) renfermant un groupe moteur électrique (2) et présentant une région formant une embase (4) dont la face supérieure (6) est traversée par l'arbre de sortie (8) du groupe moteur (2) ; un bol (9) verrouillé de manière amovible sur l'embase (4) du boîtier, fermé par verrouillage par un couvercle amovible (12), et logeant un outil de travail (16) destiné à être entraîné en rotation par l'arbre (8) du groupe moteur ; et un dispositif de sécurité (25) comprenant un interrupteur (47) agencé dans le circuit d'alimentation du moteur, un poussoir (27) monté coulissant verticalement dans un logement (29) pratiqué sur toute la hauteur de la paroi périphérique (30) du bol (9), dont l'extrémité inférieure (36) est disposée à l'aplomb d'une ouverture (39) pratiquée à la périphérie de l'embase (4) du boîtier, lorsque le bol (9) est verrouillé sur l'embase, et dont l'extrémité supérieure (41) est susceptible d'être actionnée par une came (43) portée par le couvercle (12), lorsque ce dernier est verrouillé sur le bol en place, de sorte que le poussoir (27) est enfoncé dans l'ouverture (39) de l'embase, ainsi qu'un mécanisme de commande (45) logé dans le boîtier (1), actionné par le poussoir (27) lors de son enfoncement dans ladite ouverture (39), et venant commander la fermeture de l'interrupteur (47) pour autoriser l'alimentation du moteur,
**caractérisé en ce que** le dispositif de sécurité (25) comprend en outre une pièce rigide formant un cache (49) qui est monté mobile sur la face supérieure (6) de l'embase (4) du boîtier entre une position de repos en laquelle il est amené automatiquement lorsque le bol (9) n'est pas en place sur l'embase (4) et dans laquelle il masque l'ouverture (39) de l'embase, et une position active pour laquelle il est déplacé sous l'action d'un organe d'actionnement (51) porté par le bol (9) lors du verrouillage de celui-ci sur l'embase (4) et dans laquelle il découvre l'ouverture (39) de l'embase de manière à permettre le passage du poussoir (27).

2. Appareil électroménager selon la revendication 1,
**caractérisé en ce que** le cache (49) est monté coulissant horizontalement, suivant une direction transversale à l'axe vertical (XX') de l'arbre (8) du groupe moteur, dans un logement (53) qui est pratiqué dans la face supérieure (6) de l'embase (4) en s'étendant jusqu'au bord périphérique de ladite embase (4), et dans lequel débouche l'ouverture (39) de l'embase, ledit cache (49) étant monté coulissant à l'encontre d'un ressort de rappel (55) qui tend à le rappeler en position de repos.

3. Appareil électroménager selon la revendication 2,
**caractérisé en ce que** l'embase (4) présente à sa périphérie, en regard du cache (49), un renflement vertical saillant (57) ayant une partie supérieure formant une aile (58) s'élevant à une certaine hauteur par rapport à la face supérieure (6) de l'embase (4), tandis que le cache (49) comporte, à son extrémité dite avant située à la périphérie de l'embase (4), une aile verticale (61) qui s'élève à la même hauteur que l'aile (58) du renflement (57) et qui est de mêmes dimensions que cette aile (58) du renflement, ladite aile (61) du cache (49) étant accolée à l'aile (58) du renflement (57) lorsque le cache (49) est en position de repos et étant séparée de cette aile (58) du renflement lorsque le cache (49) vient occuper par coulissement sa position active de manière à former entre elles un espace (63) débouchant dans le logement (53) du cache et constituant l'ouverture (39) de passage du poussoir (27).

4. Appareil électroménager selon la revendication 2 ou 3, dans lequel la face supérieure (6) de l'embase (4) du boîtier porte en saillie une galette (18) dont la face supérieure (19) est munie latéralement de crans (21) dans lesquels viennent s'insérer des ergots (22) portés par la paroi de fond (14) du bol (9) lors du verrouillage de ce dernier sur l'embase, constituant ainsi un verrouillage à baïonnette,
**caractérisé en ce que** l'un (21) des crans s'étend au niveau du cache (49) et l'ergot (22) qui lui est associé présente une rampe (51) constituant l'organe d'actionnement et venant agir sur une nervure (65) qui est formée sur le cache (49) en étant positionnée dans ledit cran (21), d'une façon sous-jacente à la face supérieure (19) de la galette (18), de manière à faire coulisser le cache (49) vers sa position active.

5. Appareil électroménager selon les revendications 3 et 4,
**caractérisé en ce que** le cache (49), l'aile (61) et la nervure (65) sont réalisés d'une seule pièce en matière plastique rigide.

6. Appareil électroménager selon l'une des revendications 2 à 5,
**caractérisé en ce que** le cache (49) coulisse vers sa position active suivant une faible course, de l'ordre de 3 millimètres.

7. Appareil électroménager selon l'une des revendications 2 à 6,
**caractérisé en ce que** le mécanisme de commande (45) comporte un levier basculant (68) s'étendant en dessous du cache (49) en étant articulé sur celui-ci, dont l'une (69) des extrémités est située à proximité du bord périphérique de l'embase (4) et est destinée à être actionnée par le poussoir (27) lors de l'enfoncement de celui-ci dans l'ouverture (39) de l'embase, ainsi qu'une pièce de commande (81) montée coulissante horizontalement dans l'embase (4), suivant la même direction transversale que le cache, associée à une patte (83) portée par le levier (68) en étant sollicitée par un ressort de rappel (55) constituant le ressort de rappel du cache, et susceptible de coulisser à l'encontre dudit ressort de rappel (55), dans une première phase, suivant une première partie de course dite d'approche (d), sous l'action de la patte (83) du levier (68) lorsque le cache (49) est déplacé vers sa position active par suite du verrouillage du bol (9) sur l'embase (4), le couvercle (12) n'étant pas verrouillé sur le bol (9), puis dans une seconde phase, suivant une seconde partie de course (d'), sous l'action également de la patte (83) du levier (68) lors du basculement de celui-ci par suite de l'actionnement de l'extrémité (69) du levier par le poussoir (27) lors de l'enfoncement de celui-ci consécutif au verrouillage du couvercle (12) sur le bol (9), ladite pièce de commande (81) possédant un premier doigt (85) susceptible d'enfoncer une touche (87) de l'interrupteur (47) en fin de course de cette pièce de commande (81) de manière à fermer le circuit d'alimentation du moteur.

8. Appareil électroménager selon la revendication 7,
**caractérisé en ce que** l'autre éxtrémité (70) du levier (68) est conformée en une biellette (72) montée articulée sur la face supérieure du cache (49), à travers un évidement (74) pratiqué dans le cache (49), au moyen d'un axe d'articulation (76) constituant l'axe de basculement du levier (68), et qui est sollicitée par un ressort de compression accumulateur d'énergie (78) s'étendant dans un plan parallèle à celui passant par le ressort de rappel (55) de la pièce de commande (81) et présentant une force de compression qui est notablement supérieure à celle du ressort de rappel (55) de la pièce de commande de manière à maintenir enfoncée la touche (87) de l'interrupteur (47) en fin de course de la pièce de commande (81).

9. Appareil électroménager selon la revendication 7 ou 8,
**caractérisé en ce que** la pièce de commande (81) possède un second doigt (86) qui coopère de manière simultanée au premier doigt (85) avec un autre interrupteur (90) venant occuper soit un état ouvert en fin de course de la pièce de commande (81), soit un état fermé en lequel il est amené par rappel de la pièce de commande (81) et dans lequel il commande des moyens de freinage du moteur.

10. Appareil électroménager selon la revendication 9,
**caractérisé en ce que** la pièce de commande (81) et les premier (85) et second (86) doigts sont réalisés d'une seule pièce en matière plastique.

## Patentansprüche

1. Elektroküchengerät für die Behandlung von Nahrungsmitteln mit einem Gehäuse (1), das ein elektrisches Antriebsaggregat (2) umschließt und einen Bereich aufweist, der eine Basis (4) bildet, deren Oberseite (6) von der Abtriebswelle (8) des Antriebsaggregats (2) durchsetzt ist, einer Schüssel (9), die abnehmbar auf der Basis (4) des Gehäuses verriegelt, durch einen abnehmbaren Deckel (12) mit Verriegelung verschlossen ist und ein Arbeitswerkzeug (16) aufnimmt, das durch die Welle (8) des Antriebsaggregats gedreht wird; und mit einer Sicherheitsvorrichtung (25) mit einem Schalter (47), der im Speisestromkreis des Motors angeordnet ist, einem Drücker (27), der vertikal verschiebbar in einem Sitz (29) montiert ist, der über die gesamte Höhe der Umfangswand (30) der Schüssel (9) ausgebildet ist, wobei dessen unteres Ende (36) gegenüber einer am Umfang der Basis (4) des Gehäuses ausgebildeten Öffnung (39) angeordnet ist, wenn die Schüssel (9) auf der Basis verriegelt ist, und dessen oberes Ende (41) durch eine vom Deckel (12) getragene Nocke (43) betätigbar ist, wenn der Deckel auf der an ihrem Platz befindlichen Schüssel verriegelt wird, so daß der Drücker (27) in die Öffnung (39) der Basis eingedrückt wird, sowie mit einem im Gehäuse (1) untergebrachten Steuermechanismus (45), der vom Drücker (27) bei dessen Eindrücken in die Öffnung (39) betätigt wird und der das Schließen des Schalters (47) steuert, um die Stromversorgung des Motors zu ermöglichen, **dadurch gekennzeichnet, daß** die Sicherheitsvorrichtung (25) außerdem ein starres Teil aufweist, das eine Abdeckung (49) bildet, die an der Oberseite (6) der Basis (4) des Gehäuses zwischen einer Ruhestellung, in die sie automatisch gebracht wird, wenn die Schüssel (9) nicht an ihrem Platz auf der Basis (4) ist und in der sie die Öffnung (39) der Basis verdeckt, und einer aktiven Stellung verschiebbar ist, in die sie unter der Wirkung eines von der Schüssel (9) getragenen Betätigungselements (51) bei der Verriegelung der Schüssel auf der Basis (4) verschoben wird und in der sie die Öffnung (39) der Basis aufdeckt, um den Durchtritt des Drückers (29) zu ermöglichen.

2. Elektroküchengerät nach Anspruch 1, **dadurch gekennzeichnet, daß** die Abdekkung (49) horizontal gemäß einer zur vertikalen Achse (XX') der Abtriebswelle (8) des Antriebsaggregats querverlaufenden Richtung horizontal verschiebbar in einem Sitz (53) montiert ist, der in der Oberseite (6) der Basis (4) ausgebildet ist und sich bis zum Umfangsrand der Basis (4) erstreckt und in dem die Öffnung (39) der Basis mündet, wobei die Abdeckung (49) gegen eine Rückstellfeder (55) verschiebbar montiert ist, welche sie in Richtung auf die Ruhestellung beaufschlagt.

3. Elektroküchengerät nach Anspruch 2, **dadurch gekennzeichnet, daß** die Basis (4) an ihrem Umfang gegenüber der Abdeckung (49) eine vertikal vorspringende Ausbuchtung (57) mit einem oberen Teil aufweist, der einen Flügel (58) bildet, der sich über eine bestimmte Höhe bezüglich der Oberseite (6) der Basis (4) erstreckt, während die Abdekkung (49) an ihrem sogenannten Vorderende, das am Umfang der Basis (4) liegt, einen senkrechten Flügel (61) aufweist, der sich bis zur gleichen Höhe wie der Flügel (58) der Ausbuchtung (57) erstreckt und der die gleichen Abmessungen wie dieser Flügel (58) der Ausbuchtung hat, wobei der Flügel (61) der Abdeckung (49) an den Flügel (58) der Ausbuchtung (57) angelegt ist, wenn die Abdeckung (49) sich in der Ruhestellung befindet, und von diesem Flügel (58) der Ausbuchtung getrennt ist, wenn die Abdeckung (49) durch Verschiebung ihre aktive Stellung einnimmt, so daß zwischen diesen Flügeln ein Raum (63) gebildet wird, der in den Sitz (53) der Abdeckung mündet und die Öffnung (39) für den Durchtritt des Drückers (27) bildet.

4. Elektroküchengerät nach Anspruch 2 oder 3, worin die Oberseite (6) der Basis (4) des Gehäuses vorspringend eine Scheibe (18) trägt, deren Oberseite (19) seitlich mit Kerben (21) versehen ist, in welche von der Bodenwand (14) der Schüssel (9) getragene Zapfen (22) bei der Verriegelung der Schüssel auf der Basis eingreifen, wodurch eine Bajonettverriegelung gebildet wird, **dadurch gekennzeichnet, daß** eine (21) der Kerben sich auf der Höhe der Abdeckung (49) erstreckt und der zu ihr gehörende Zapfen (22) eine Rampe (51) aufweist, die das Betätigungselement bildet und auf eine Rippe (65) wirkt, die auf der Abdeckung (49) gebildet ist, indem sie in der Kerbe (21) unter der Oberseite (19) der Scheibe (18) positioniert ist, um die Abdeckung (49) in ihre aktive Stellung zu verschieben.

5. Elektroküchengerät nach den Ansprüche 3 und 4, **dadurch gekennzeichnet, daß** die Abdeckung (49), der Flügel (61) und die Rippe (65) einstückig aus starrem Kunststoff hergestellt sind.

6. Elektroküchengerät nach einem der Ansprüche 2 bis 5, **dadurch gekennzeichnet, daß** die Abdeckung (49) über eine geringe Strecke in der Größenordnung von 3 mm in ihre aktive Position verschiebbar ist.

7. Elektroküchengerät nach einem der Ansprüche 2 bis 6, **dadurch gekennzeichnet, daß** der Steuerungsmechanismus (45) einen Schwenkhebel (68) aufweist, der sich unterhalb der Abdeckung (49) erstreckt und dabei an dieser angelenkt ist, wobei eines (69) seiner Enden in der Nähe des Umfangsrandes der Basis (4) angeordnet ist und dazu bestimmt ist, daß es vom Drücker (27) bei dessen Eindrücken in die Öffnung (39) der Basis betätigt wird, während ein Steuerteil (81) in der Basis (4) horizontal gemäß dergleichen Querrichtung wie die Abdeckung verschiebbar montiert ist und mit einem vom Schwenkhebel (68) getragenen Fuß (83) zusammenwirkt, wobei das Steuerteil durch eine Rückstellfeder (55) beaufschlagt ist, welche die Rückstellfeder der Abdeckung bildet, gegen die Rückstellfeder (55) in einer ersten Phase gemäß einem ersten Wegstreckenteil, der sogenannten Annäherungsstrecke (d), unter der Wirkung des Fußes (83) des Schwenkhebels (68) verschiebbar ist, wenn die Abdeckung (49) in Folge der Verriegelung der Schüssel (9) auf der Basis (4) in ihre aktive Stellung verschoben ist, wobei der Deckel (12) nicht auf der Schüssel (9) verriegelt ist, und dann in einer zweiten Phase gemäß einem zweiten Streckenteil (d') wiederum unter der Wirkung des Fußes (83) des Schwenkhebels (68) beim Schwenken desselben in Folge der Betätigung des Endes (69) des Schwenkhebels durch den Drücker (27) beim Eindrücken desselben in Folge der Verriegelung des Deckels (12) auf der Schüssel (9) verschoben wird, wobei das Steuerteil (81) einen ersten Finger (85) aufweist, der eine Taste (87) des Schalters (47) am Ende der Wegstrecke dieses Steuerteils (81) eindrücken kann, um den Stromversorgungskreis des Motors zu schließen.

8. Elektroküchengerät nach Anspruch 7, **dadurch gekennzeichnet, daß** das andere Ende (70) des Schwenkhebels (68) als ein Schwingarm (72) ausgebildet ist, der an der Oberseite der Abdeckung (49) durch eine in der Abdeckung (49) ausgebildete Ausnehmung (74) mittels einer Schwenkachse (76), welche die Schwenkachse des Hebels bildet, angelenkt ist und durch eine energiesammelnde Kompressionsfeder (78), die sich in einer zu der durch die Rückstellfeder (55) des Steuerteils (81) gehenden Ebene parallelen Ebene erstreckt und eine erheblich größere Kompressionskraft als die der Rückstellfeder (55) des Steuerteils besitzt, beaufschlagt ist, um die Taste (87) des Schalters (47) am Ende der Wegstrecke des Steuerteils (81) eingedrückt zu halten.

9. Elektroküchengerät nach Anspruch 7 oder 8, **dadurch gekennzeichnet, daß** das Steuerteil (81) einen zweiten Finger (86) aufweist, der gleichzeitig mit dem ersten Finger (85) mit einem anderen Schalter (90) zusammenwirkt, der entweder eine offene Stellung am Ende der Verschiebungsstrecke des Steuerteils (81) oder eine geschlossene Stellung einnehmen kann, in die er durch Rückstellung des Steuerteils (81) gebracht wird und in der er die Bremsvorrichtung des Motors steuert.

10. Elektroküchengerät nach Anspruch 9, **dadurch gekennzeichnet, daß** das Steuerteil (81) und der erste Finger (85) und zweite Finger (86) einstückig aus Kunststoff hergestellt sind.

## Claims

1. Domestic electrical appliance for processing food, comprising a casing (1) enclosing an electric motor unit (2) and having a region forming a base (4), the top face (6) of which has the output shaft (8) of the motor unit (2) passing through it; a bowl (9) removably locked on the base (4) of the casing, closed by locking by means of a removable lid (12), and housing a working tool (16) intended to be driven in rotation by the shaft (8) of the motor unit; and a safety device (25) comprising a switch (47) arranged in the supply circuit of the motor, a pusher (27) mounted so as to slide vertically in a housing (29) formed over the entire height of the peripheral wall (30) of the bowl (9), the bottom end (36) of which is disposed vertically in line with an opening (39) formed at the periphery of the base (4) of the casing, when the bowl (9) is locked on the base, and the top end (41) of which is able to be actuated by a cam (43) carried by the lid (12), when the latter is locked on the bowl in place, so that the pusher (27) is pushed into the opening (39) in the base, as well as a control mechanism (45) housed in the casing (1), actuated by the pusher (27) when it is pushed into the said opening (39), and controlling the closure of the switch (47) to enable the motor to be supplied, **characterised in that** the safety device (25) also comprises a rigid piece forming a cover (49) mounted so as to be able to move on the top face (6) of the base (4) of the casing between an idle position into which it is brought automatically when the bowl (9) is not in place on the base (4) and in which it conceals the opening (39) in the base, and an active position into which it is moved under the action of an actuating member (51) carried by the bowl (9) when the latter is locked on the base (4) and in which it uncovers the opening (39) in the base so as to enable the pusher (27) to pass.

2. Domestic electrical appliance according to Claim 1, **characterised in that** the cover (49) is mounted so as to slide horizontally, in a direction transverse to the vertical axis (XX') of the shaft (8) of the motor unit, in a housing (53) formed in the top face (6) of the base (4) whilst extending as far as the peripheral edge of the said base (4), and into which the opening (39) in the base opens out, the said cover (49) being mounted so as to slide counter to a return spring (55) which tends to return it to the idle position.

3. Domestic electrical appliance according to Claim 2, **characterised in that** the base (4) has at its periphery, opposite the cover (49), a projecting vertical bulge (57) having a top part forming a wing (58) rising to a certain height with respect to the top face (6) of the base (4), whilst the cover (49) has, at its so-called front end situated at the periphery of the base (4), a vertical wing (61) which rises to the same height as the wing (58) on the bulge (57) and which is of the same dimensions as this wing (58) on the bulge, the said wing (61) on the bulge (49) being pressed against the wing (58) on the bulge (57) when the cover (49) is in the idle position and being separated from this wing (58) of the bulge when the cover (49) comes to occupy, by sliding, its active position so as to form between them a space (63) opening out into the housing (53) of the cover and constituting the passage opening (39) for the pusher (27).

4. Domestic electrical appliance according to Claim 2 or 3, in which the top face (6) of the base (4) of the casing carries, projecting, a roller (18) whose top face (19) is provided laterally with notches (21) in which lugs (22) carried by the bottom wall (14) of the bowl (9) come to be inserted when the latter is locked on the base, thus constituting a bayonet locking, **characterised in that** one (21) of the notches extends at the level of the cover (49) and the lug (22) which is associated with it has a ramp (51) constituting the actuation member and coming to act on a rib (65) which is formed on the cover (49) whilst being positioned in the said notch (21), subjacent to the top face (19) of the roller (18), so as to cause the cover (49) to slide towards its active position.

5. Domestic electrical appliance according to Claims 3 and 4, **characterised in that** the cover (49), the wing (61) and the rib (65) are produced in a single piece from rigid plastics material.

6. Domestic electrical appliance according to one of Claims 2 to 5, **characterised in that** the cover (49) slides towards its active position over a small travel, of around 3 millimetres.

7. Domestic electrical appliance according to one of Claims 2 to 6, **characterised in that** the control mechanism (45) comprises a tilting lever (68) extending below the cover (49) whilst being articulated thereon, one (69) of the ends of which is situated close to the peripheral edge of the base (4) and is intended to be actuated by the pusher (27) when the latter is pushed into the opening (39) in the base, as well as a control piece (81) mounted so as to slide horizontally in the base (4), in the same transverse direction as the cover, associated with a toe (83) carried by the lever (68) whilst being acted on by a return spring (55) constituting the return spring for the cover, and able to slide counter to the said return spring (55), in a first phase, following a first part of a travel called the approach (d), under the action of the toe (83) on the lever (68) when the cover (49) is moved towards its active position following the locking of the bowl (9) on the base (4), the lid (12) not being locked on the bowl (9), and then, in a second phase, following a second part of the travel (d'), also under the action of the toe (83) on the lever (68) when the latter tilts following the actuation of the end (69) of the lever by the pusher (27) when the latter is pushed in subsequent to the locking of the cover (12) of the bowl (9), the said control piece (81) having a first finger (85) able to push in a button (87) on the switch (47) at the end of travel of this control piece (81) so as to close the motor supply circuit.

8. Domestic electrical appliance according to Claim 7, **characterised in that** the other end (70) of the lever (68) is formed as a rocker bar (72) mounted so as to be articulated on the top face of the cover (49), through a recess (74) formed in the cover (49), by means of an articulation spindle (76) constituting the tilting axis of the lever (68), and which is acted on by an energy-accumulating compression spring (78) extending in a plane parallel to that passing through the return spring (55) of the control piece (81), and having a compression force which is appreciably greater than that of the return spring (55) of the control piece so as to keep the button (87) on the switch (47) pressed in at the end of travel of the control piece (81).

9. Domestic electrical appliance according to Claim 7 or 8, **characterised in that** the control piece (81) has a second finger (86) which cooperates simultaneously with the first finger (85) with another switch (90) coming to occupy either an open state at the end of travel of the control piece (81) or a closed state into which it is brought by the return of the control piece (81) and in which it controls means of braking the motor.

10. Domestic electrical appliance according to Claim 9, **characterised in that** the control piece (81) and the first (85) and second (86) fingers are produced in a single piece from plastics material.
